Europäisches Patentamt

European Patent Office

Office européen des brevets

(19)

(11) Numéro de publication : **0 281 469 B1**

## (12) FASCICULE DE BREVET EUROPEEN

(45) Date de publication du fascicule du brevet :
28.08.91 Bulletin 91/35

(51) Int. Cl.⁵ : **G01V 3/20**

(21) Numéro de dépôt : 88400433.4

(22) Date de dépôt : 25.02.88

(54) **Dispositif permettant notamment d'utiliser une sonde de diagraphie de faible diamètre dans des puits de grands diamètres.**

(30) Priorité : 27.02.87 FR 8702757
02.07.87 US 69174

(43) Date de publication de la demande :
07.09.88 Bulletin 88/36

(45) Mention de la délivrance du brevet :
28.08.91 Bulletin 91/35

(84) Etats contractants désignés :
AT BE CH DE FR GB IT LI LU NL SE

(56) Documents cités :
WO-A-81/03382
FR-A- 1 102 950
US-A- 3 293 542
US-A- 4 236 113
US-E- 23 621

(73) Titulaire : INSTITUT FRANCAIS DU PETROLE
4, Avenue de Bois-Préau
F-92502 Rueil-Malmaison (FR)

(72) Inventeur : Wittrisch, Christian
24, rue George Sand
F-92500 Rueil Malmaison (FR)

EP 0 281 469 B1

## Description

La présente invention propose un dispositif élargisseur et/ou éventuellement protecteur pour sondes ou instruments employés en forage dans le sol et des méthodes utilisant ce dispositif.

La présente invention permet d'effectuer des mesures de diagraphie dans un trou de grand diamètre à l'aide d'une sonde de diagraphie adaptée à opérer dans des trous de faibles diamètres.

Bien entendu, la notion de grand diamètre du trou est à considérer relativement aux dimensions de la sonde.

En outre, la présente invention permet de protéger les sondes ou les instruments ou des parties sensibles de ceux-ci contre les actions mécaniques latérales et/ou longitudinales.

Lorsque l'on effectue des mesures, du fait des coincements, des éboulements dans le puits, ou des poussées importantes (plusieurs dizaines de tonnes voire centaines de tonnes) ou des torsions effectuées sur le train de tiges, les sondes et/ou les outils sont soumis à des actions susceptibles de les détruire irrémédiablement notamment certains de ces instruments en général très coûteux.

Les sondes généralement utilisées dans le domaine de la diagraphie des puits ont des diamètres standards (par exemple 85 mm ou 92,5 mm).

Ces sondes permettent d'effectuer des mesures de bonne qualité dans des trous ayant des diamètres n'excédant pas une valeur-limite. Ainsi, pour des sondes de mesure de résistivité de la formation géologique, il convient que le rapport du diamètre du trou sur le diamètre de la bande n'excède pas sensiblement 3,5. Ceci est dû au phénomène qualifié "d'effet de trou" par l'homme de l'art et qui sera expliqué plus loin.

La présente invention permet, en adaptant un élargisseur de diamètre à la sonde, d'effectuer des mesures de bonne qualité tout en ayant une sonde de faible diamètre. Il devient donc possible, selon la présente invention, d'augmenter la plage des dimensions des puits dans lesquels peut intervenir une sonde donnée.

On connaît par le brevet FR-1.102.950 un dispositif permettant le contact des électrodes d'une sonde contre la paroi d'un forage pétrolier, les électrodes sont montées sur des lames élastiques.

La présente invention propose un dispositif simple et d'une mise en oeuvre fiable. Les risques de coincement de l'élargisseur dans le puits sont faibles puisqu'en fonctionnement normal l'élargisseur n'exerce pas de forte pression sur les parois du puits. Dans le cas de coincement dû à un affaissement de la formation géologique ou à un éboulement, l'élargisseur protége les parties sensibles de la sonde. De plus l'élargisseur selon l'invention peut s'adapter à des sondes de grande longueur.

Ainsi, la présente invention concerne un dispositif permettant d'utiliser une sonde de diagraphie de faible diamètre relativement à un puits dans lequel elle doit opérer. Ce dispositif se caractérise en ce qu'il comporte un élargisseur du diamètre de ladite sonde.

On connaît par le brevet WO-A-81/03.382 un procédé décrivant la descente d'une sonde de prospection dans une masse-tige située au-dessus du trépan de forage. L'élément qui joue le rôle de réceptacle de la sonde, est partie intégrante de la garniture de forage, les mesures se font en remontant conjointement la garniture et la sonde reliée à la surface par un câble conventionnel.

Selon un mode particulier de réalisation, cet élargisseur pourra entourer au moins une partie sensible de la sonde qui pourra être adaptée à déterminer des caractéristiques électromagnétiques des formations géologiques.

Cet elargisseur pourra comporter une enveloppe non gonflable entourant au moins une partie sensible de ladite sonde. Par non gonflable on entend que le diamètre de l'enveloppe ne varie pas du fait du gonflage de cette enveloppe.

Cette enveloppe pourra délimiter un espace sensiblement étanche autour de la partie sensible de ladite sonde.

Cet espace étanche pourra être rempli d'un matériau non conducteur de l'électricité tel de l'eau distillée ou de l'huile.

L'élargisseur de sonde pourra comporter des électrodes correspondantes à celles de la sonde et des moyens de liaison électrique entre les électrodes de ladite sonde et celles de l'élargisseur.

Les moyens de liaison électrique pourront comporter une couronne électrique.

L'élargisseur comporte des moyens de centrage de ladite enveloppe, qui pourront essentiellement comporter des couronnes.

Les moyens de centrage pourront comporter des moyens de fixation.

Le dispositif selon l'invention pourra comporter des entretoises servant au positionnement de certaines au moins desdites couronnes, de même qu'il pourra comporter des cloisons non conductrices de l'électricité interposées entre au moins deux électrodes de la sonde.

L'élargisseur selon l'invention pourra être un ensemble massif.

Le dispositif selon l'invention peut être adapté à une sonde à induction ou de mesure de résistivité notamment focalisée ou à une sonde combinant des mesures de résistivité et d'induction.

Le dispositif selon l'invention pourra très avantageusement assurer en outre la protection de ladite sonde et plus précisément de ces parties fragiles qui correspondent généralement aux zones actives ou sensibles de la sonde.

En outre, la présente invention propose un organe permettant la fixation d'un carter de sonde ou d'instrument.

On entend par carter de sonde ou d'instrument, tout élément susceptible d'isoler la sonde ou l'instrument sur au moins une partie de ceux-ci. Ce carter peut être par exemple un écran local ou une enveloppe englobant sensiblement la totalité de la sonde.

Ce carter peut servir par exemple soit à la protection des influences provenant de l'extérieur, telles les corps étrangers, les contraintes physiques (mécanique, thermique...) ou chimiques, soit à la sélection des influences provenant ou allant vers la sonde, telles celles de rayonnements focalisés à travers une fenêtre et détectés au travers d'une autre.

Cet organe de fixation se caractérise en ce qu'il comporte au moins un logement coopérant avec au moins un élément d'arrêt, et en ce qu'il comporte en outre un ensemble de pièces de fixation retenu par l'élément d'arrêt comportant au moins deux butées coopérant avec l'élément d'arrêt pour réaliser la fixation du carter sur la sonde.

Le logement pourra être une gorge solidaire de la sonde, et l'élément d'arrêt, tel un système de deux demi-lunes, réalisera un collet pour la sonde.

L'un au moins des éléments d'arrêt pourra coopérer avec deux des butées de l'ensemble de pièces de fixation.

L'ensemble de pièces de fixation pourra comporter une pièce supplémentaire de réglage permettant de déplacer le carter relativement à la sonde.

Le carter pourra être un carter de protection d'au moins une partie sensible de la sonde.

Le carter pourra être un élargisseur d'au moins une partie sensible de la sonde.

L'organe de fixation pourra comporter au moins deux gorges coopérant chacune avec un élément d'arrêt et réalisant chacun un collet pour la sonde et l'ensemble de pièces de fixation pourra coopérer avec au moins ces collets.

Le carter pourra comporter au moins une fenêtre adaptée à laisser passer des organes actifs de mesures et/ou d'intervention de la sonde ou de l'instrument.

Le dispositif et l'organe de fixation selon la présente invention peuvent être appliqués à un puits formé dans une formation géologique notamment pour faire de la prospection pétrolière.

La présente invention sera mieux comprise et ses avantages apparaîtront plus clairement à la description qui suit de différents modes de réalisation, nullement limitatifs, illustrés par les figures, ci-annexées, parmi lesquelles :

— la figure 1 illustre une sonde nue, placée dans un trou de grand diamètre,

— la figure 2 montre une sonde équipée d'un élargisseur de sonde,

— les figures 3 et 4, représentent un mode particulier de réalisation des élargisseurs de sonde,

— les figures 5 et 6 montrent deux modes particuliers de réalisation d'élargisseurs de sonde adaptés, par exemple, aux sondes à induction,

— les figures 7 et 8 concernent deux modes de réalisation particuliers d'élargisseurs de sonde adaptés à des sondes comportant des électrodes, par exemple pour la mesure de la résistivité d'une formation géologique,

— la figure 9 représente un élargisseur de sonde adapté à une sonde comportant des électrodes et pouvant effectuer des mesures d'induction, et

— les figures 10 à 13 illustrent différents modes de réalisation du prolongement électrique entre les électrodes de la sonde et les électrodes de l'élargisseur.

— la figure 14 montre une sonde équipée d'un carter de protection contre les efforts de torsion.

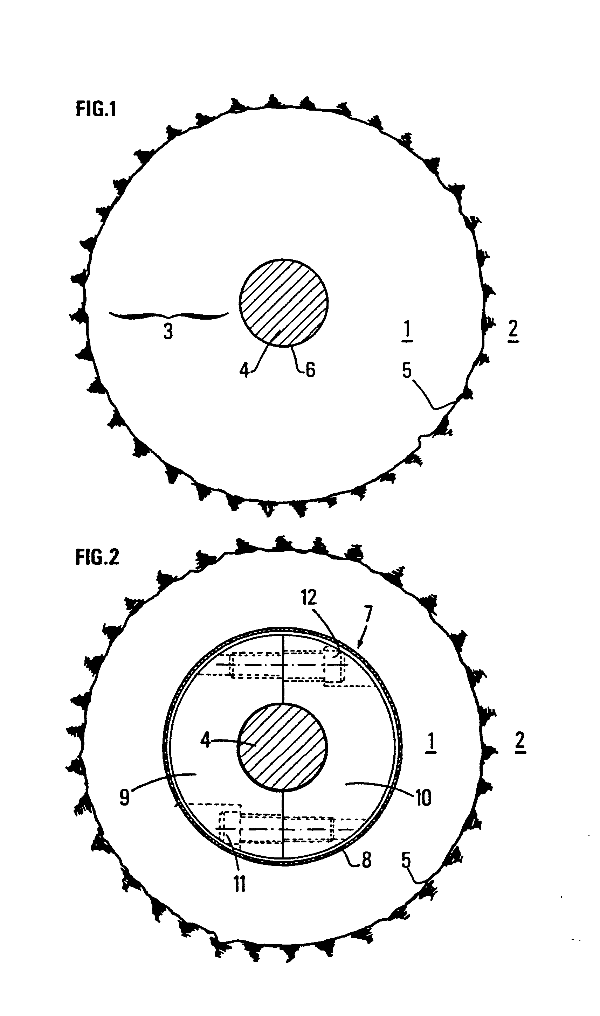

La figure 1 représente la vue en coupe d'un puits 1 foré dans une formation géologique 2.

La référence 5 désigne les parois du puits et la référence 4 la sonde de mesure.

Le diamètre d de la sonde de mesure 4 est bien inférieur au diamètre D du puits. De ce fait, un nombre important des lignes du champ électrique ou électromagnétique ne passent pas dans la formation géologique et sont court-circuitées à travers la boue qui emplit l'espace libre 3 compris entre la sonde 4 et les parois du puits 5. La référence 6 désigne la paroi extérieure de la sonde 4.

La présente invention propose d'adapter un élargisseur de sonde 7 (fig. 2) à la sonde 4.

Sur la figure 2, l'élargisseur de sonde comporte une enveloppe 8 de forme cylindrique dont le diamètre T est supérieur à celui de la sonde (d) et inférieur à celui du puits (D).

Sur la figure 2 l'enveloppe cylindrique 8 est maintenue coaxialement à la sonde par une cloison en forme de couronne comportant deux demi-coquilles 9 et 10 reliées entre elles par des vis 11 et 12 dont le serrage assure le maintien sur la sonde. D'autres systèmes de fixation des cloisons sur la sonde peuvent être envisagés sans sortir du cadre de la présente invention. Par exemple, la cloison peut avoir la forme d'une couronne formée d'une seule pièce dont le diamètre intérieur est légèrement supérieur à celui de la sonde. Cette couronne 15 (figure 11) pourra comporter un filetage radial 13 (figure 11) avec lequel pourra coopérer une vis 14 dont le serrage assure le maintien de la couronne sur le corps de la sonde 4.

Ainsi l'élargisseur est sensiblement rigide et n'est pas gonflable.

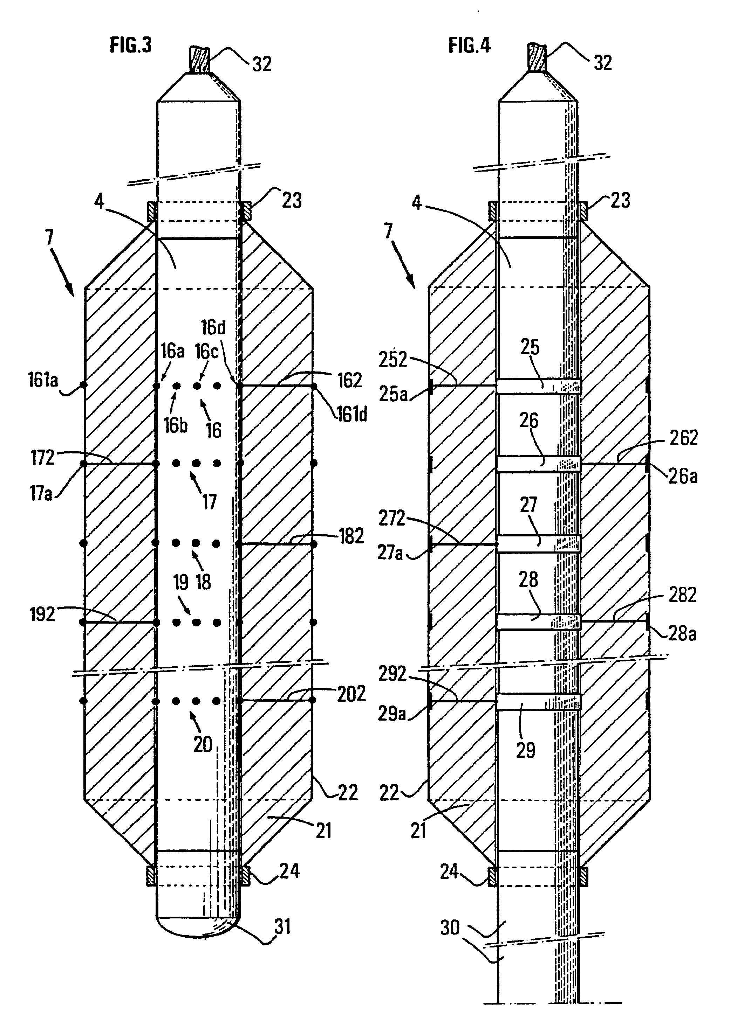

Les figures 3 et 4 illustrent le cas où l'élargisseur de sonde est un ensemble massif.

Cet ensemble pourra comporter une enveloppe contenant un matériau de remplissage, ou être simplement une pièce d'un seul tenant, ou un empilement de couronnes.

Sur la figure 3, la sonde 4 est une sonde servant à effectuer des mesures de résistivité et d'induction.

Cette sonde comporte cinq rangées 16, 17, 18, 19 et 20 d'éléments actifs. Chacune de ces rangées comporte plusieurs électrodes 16a, 16b, 16c... ayant la forme de pastilles et disposées suivant un cercle inscrit sur le corps de la sonde 4.

L'élargisseur de sonde 7 comporte un matériau massif 21 tel une résine époxy isolante électriquement.

L'élargisseur 7 comporte sur sa paroi extérieure 22 des électrodes 161a à 161d ayant également la forme de pastilles.

Lorsque les électrodes 16a, 16b, 16c, 16d... sont connectées entre elles électriquement, les électrodes 161a, 161b... d'une même rangée seront également connectées entre elles électriquement et il suffira qu'une seule des électrodes de l'élargisseur soit reliée électriquement à une électrode de la rangée homologue 16 de la sonde. Ceci est représenté par les liaisons électriques 162, 172, 182, 192 et 202 respectivement pour les rangées 16, 17, 18, 19 et 20 sur les figures 3 et 4.

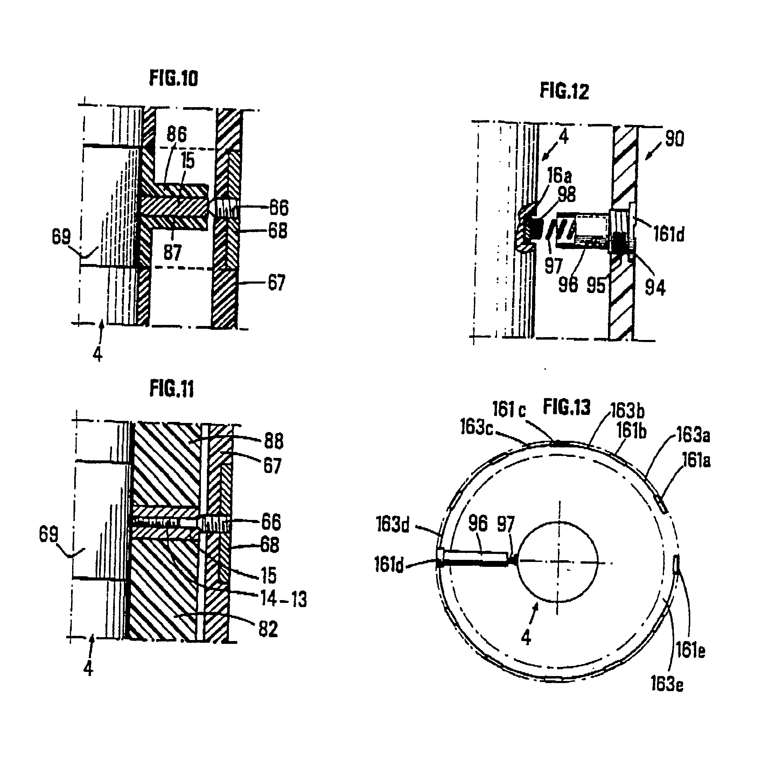

Les pastilles d'une même rangée de l'élargisseur sont alors connectées entre elles, cependant au moins deux pastilles d'une même rangée ne sont pas connectées entre elles, de manière à ne pas former des circuits fermés et provoquer la création de boucles de courants. Ceci est illustré par la figure 13 qui montre bien qu'il n'y a pas de liaison électrique entre la pastille 161e et 161a, alors qu'il existe des liaisons électriques 163a, 163b, 163c, 163d, 163e.

Une telle configuration permet au champ d'induction de traverser sans trop d'affaiblissement l'élargisseur 7 de la sonde 4.

L'élargisseur de sonde est maintenu sur la sonde par les bagues de positionnement et de maintien 23 et 24 (fig. 3 et 4).

La figure 4 représente le cas d'un élargisseur 7 de sonde 4 formant un ensemble massif adapté à une sonde de mesure de la résistivité de la formation qui n'effectue pas de mesures d'induction. Généralement ce type de sonde comporte des électrodes en forme d'anneaux continus, placés à différentes hauteurs de la sonde.

La sonde de la figure 4 comporte cinq électrodes annulaires portant les références 25, 26, 27, 28 et 29.

L'élargisseur comporte cinq électrodes annulaires homologues des précédentes et portant respectivement les références 25a, 26a, 27a, 28a et 29a.

Chacune de ces électrodes est reliée à l'électrode correspondante de la sonde par des moyens de liaison électrique 252, 262, 272, 282, et 292.

Ces moyens de liaison peuvent comporter des tiges métalliques éventuellement filetées et/ou comporter des poussoirs, tels ceux illustrés aux figures 12 et 13.

L'élargisseur est fixé à la sonde par des bagues 23 et 24.

Dans le cas de la figure 4, la sonde est prolongée par l'élément tubulaire inférieur 30 et il est donc nécessaire que l'élargisseur de sonde soit percé de part en part.

Dans le cas de la figure 3, l'élargisseur de sonde 7 aurait pu être fermé à sa partie inférieure et englober l'extrémité inférieure 31 de la sonde 4.

Les sondes des différentes figures 3 à 9 sont représentées suspendues à un câble 32, mais il est bien évident qu'on ne sortira pas du cadre de la présente invention en ayant les sondes fixées à l'extrémité d'un tube tel un train de tige, ou dans le cas où elles correspondent elles-mêmes à une portion d'un tube. Les brevets FR-A-2.544.013 ; FR-A-2.547.861; FR-A-2.564.894, US-A-4.457.370 et US-A-4.570.709 illustrent des exemples d'utilisation où la présente invention s'applique.

Dans le cas où la sonde 7 de la figure 3 ne serait pas une sonde mesurant à la fois la résistivité et l'induction, mais uniquement une sonde de mesure de l'induction, elle ne comporterait pas les rangées d'électrodes 16, 17, 18, 19 et 20 et l'élargisseur ne comporterait ni les électrodes 161a...161d ni les conducteurs 162, 172, 182, 192 et 202. Ainsi, l'élargisseur pourrait être constitué d'un ensemble plein, éventuellement massif, réalisé en matériau non conducteur de l'électricité, tel une résine époxy. Un tel élargisseur est sensiblement rigide.

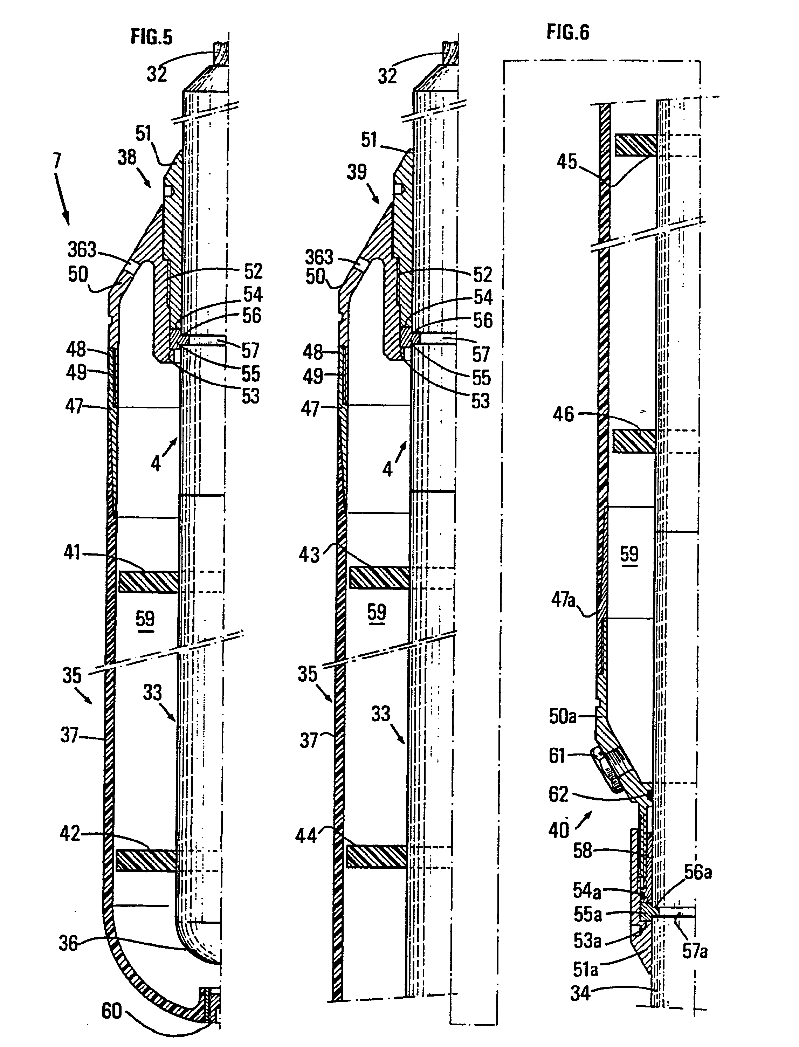

Les figures 5 et 6 représentent deux autres modes de réalisation d'élargisseur adaptés à des sondes à induction.

Dans le cas de la figure 5, la référence 33 désigne la partie sensible ou zone active de la sonde à induction qui est placée à l'extrémité d'un câble 32 et n'est pas prolongée par un élément tubulaire 34, comme cela est le cas pour la sonde de la figure 6, cet élément tubulaire pouvant être une autre sonde ou tout autre organe.

Dans le cas de la figure 5 l'élargisseur de sonde comporte une enveloppe 35 entourant l'extrémité inférieure 36 de la sonde. Cette enveloppe est réalisée en matériau ne conduisant pas l'électricité et peut être réalisée en matériau époxy non conducteur.

Bien entendu il suffit simplement que la partie 37 de l'enveloppe 35 voisine de la zone active 33 de la sonde 4 soit en matériau non conducteur de l'électricité.

Ainsi dans le cas des figures 5 et 6 les parties terminales 38, 39 et 40 des élargisseurs 7 peuvent comporter du métal.

L'enveloppe de l'élargisseur 7 est centrée par des cloisons 41 et 42, en ce qui concerne le mode de réalisation de la figure 5, et 43, 44, 45 et 46 en ce qui concerne le mode de réalisation de la figure 6. Bien entendu, au moins les cloisons voisines des zones actives 33 de la sonde sont réalisées en matériau non conducteur de l'électricité. La fixation de ces cloisons sur la sonde peut être réalisée de différentes manières, notamment comme indiqué en relation avec la figure 2.

Par ailleurs, on ne sortira pas du cadre de la présente invention si les cloisons sont solidaires de l'élargisseur, au lieu d'être solidaires de la sonde elle-même.

La description qui suit donne un mode de réalisation nullement limitatif des parties terminales 38 et 39 des élargisseurs, ces parties terminales étant adaptées à fixer l'élargisseur sur la sonde.

Dans l'exemple particulier des figures 5 et 6, l'enveloppe 35 de l'élargisseur se termine à sa partie supérieure (relativement aux figures) par une pièce métallique 47 sur laquelle est fixée au moulage, par exemple par collage, la partie de l'enveloppe non conductrice d'électricité.

Cette pièce métallique 47 se termine par un taraudage 48 qui coopère avec un filetage 49 d'une pièce intermédiaire 50. Cette pièce intermédiaire coopère avec une pièce de fixation 51 par le moyen d'un système fileté 52.

Les pièces intermédiaires et de fixation comportent respectivement des butées 53 et 54 qui enchasse un élément d'arrêt, tel un système de deux demi-lunes 55, ayant un collet 56 qui coopère avec une gorge 57.

Ainsi le serrage de la pièce intermédiaire 50 et de la pièce de fixation 51 maintient et positionne l'élargisseur de sonde.

La fixation de l'extrémité terminale inférieure 40 du mode de réalisation de la figure 6 est sensiblement similaire et comporte une partie métallique 47a qui est solidaire de la partie de l'enveloppe non métallique. Cette partie coopère avec une pièce intermédiaire 50a qui elle-même coopère avec une pièce de fixation 51a.

La pièce intermédiaire 50a coopère avec une pièce supplémentaire 58 de réglage. Cette pièce de réglage permet de prolonger la pièce intermédiaire pour réaliser une butée 54a qui va coopérer avec les demi-lunes 55a et la butée 53a pour assurer le maintien de l'extrémité terminale 40. Les demi-lunes 55a comportent des collets 56a qui coopèrent avec une gorge 57a.

L'espace 59 entre l'enveloppe 35 de l'élargisseur 7 et la sonde de mesure 4 doit comporter un élément non conducteur de l'électricité, alors que la boue se trouvant dans les milieux dans lesquels doit être utilisée la sonde est généralement conductrice. Il convient donc de prévoir un système empêchant l'introduction de la boue dans l'espace 59.

Ainsi, par exemple, cet espace libre 59 pourra être rempli d'un liquide non conducteur de l'électricité, tel de l'eau distillée ou de l'huile. Dans ce cas il convient de ne pas avoir d'ouverture à la partie inférieure de la sonde, notamment pour éviter que le liquide isolant ne s'échappe. Toutefois, afin de permettre la vidange de ce liquide, il est prévu des bouchons 60 et 61 respectivement, sur les modes de réalisation des figures 5 et 6.

De plus sur la figure 6 il est prévu un joint d'étanchéité 62.

A la partie supérieure de l'élargisseur est prévue une ouverture 363 (figures 5 et 6), afin de maintenir en équipression les espaces se trouvant de part et d'autre de l'enveloppe 35.

Un tel orifice peut servir au remplissage de l'espace libre 59.

Par ailleurs, cet orifice peut être remplacé par une membrane souple, afin de maintenir l'équilibre de pression de part et d'autre de l'enveloppe, tout en évitant un échange quelconque entre le fluide occupant l'espace libre 59 et le milieu extérieur.

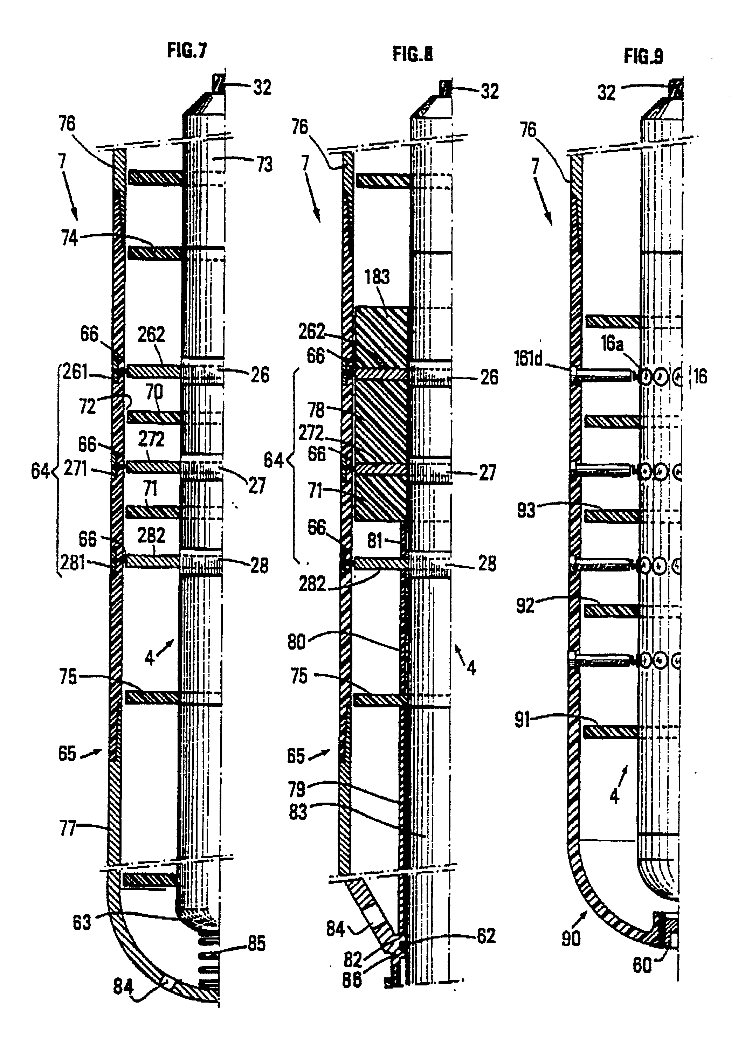

Les figures 7 et 8 illustrent deux autres modes de réalisation se rapportant à des sondes de mesure de résistivité focalisée des formations géologiques. Certaines de ces mesures de résistance focalisées sont regroupées sous le nom de "Laterolog".

Dans le cas des figures 7 et 8 la sonde 4 comporte, de manière nullement limitative, trois électrodes annulaires 26, 27 et 28.

Dans le cas de la figure 7, la sonde n'est pas prolongée par un élément tubulaire inférieur, comme cela est le cas pour la figure 8. Ainsi, dans le cas de la figure 7, l'enveloppe de l'élargisseur 7 englobe entièrement l'extrémité inférieure 63 de la sonde 4.

La portion 64 de l'enveloppe 65 de l'élargisseur 7, qui se trouve au voisinage de la zone active de la sonde 4, est réalisée en matériau non conducteur de l'électricité. Cette portion comporte des électrodes annulaires 261, 271 et 281 respectivement, homologues des électrodes 26, 27 et 28.

La liaison électrique entre les électrodes de la sonde 4 et les électrodes de l'élargisseur peut être effectuée par l'intermédiaire de couronnes conductrices 262, 272 et 282 et de pions conducteurs 66.

La fixation des couronnes 262, 272 et 282 sur les électrodes de la sonde peut être effectuée de la manière indiquée précédemment en relation avec la figure 2 ou la figure 11.

Les figures 10 et 11 montrent un mode de réalisation de pions conducteurs 66 qui sont vissés sur les électrodes 68 de l'élargisseur et/ou de l'enveloppe 67 de ce même élargisseur. Les pions 66 ainsi vissés viennent s'appuyer sur les couronnes conductrices 15 et assurent la continuité électrique entre les électrodes 69 de la sonde et 68 de l'élargisseur.

Lorsque l'espace libre entre l'enveloppe 65 et la sonde 4 n'est pas rempli d'un matériau non conducteur, comme cela est le cas pour les figures 5 et 6, alors il convient d'interposer des couronnes non conductrices 70 et 71 entre les électrodes, de manière qu'il n'y ait que de faibles quantités de courant passant d'une électrode de la sonde 4 à l'autre.

Dans le cas de la figure 7, la quantité de courant passant directement de l'électrode 26 à l'électrode 27 n'est due qu'au jeu 72 existant ente la couronne non conductrice 70 et la portion 64 de l'enveloppe 65.

Cette quantité de courant est faible, puisque le jeu 72 figure 7 est faible.

Lorsque les extrémités de la sonde 63 et 73 sont conductrices et servent à récupérer les courants de retour, il convient d'interposer des couronnes non conductrices 74 et 75 entre les électrodes extrêmes 26 et 28 et les extrémités conductrices 73 et 63 de la sonde.

Dans le cas des figures 7 et 8 les parties de l'enveloppe 65 vis à vis des extrémités conductrices 73 et 63 de la sonde 4 sont réalisées en matériau conducteur de l'électricité.

Bien entendu, ces parties, qui peuvent être métalliques, ne débutent qu'au-delà des couronnes non conductrices 74 et 75.

Les modes de réalisations illustrés aux figures 7 et 8 ont un orifice 84, à la partie basse, qui permet le passage de la boue se trouvant dans le puits et peuvent également comporter un orifice (non représenté) à la partie haute. Cet orifice peut être identique à celui 363 des figures 5 et 6.

La référence 85 désigne un ressort qui permet d'assurer une liaison directe entre la partie conductrice 77 de l'enveloppe et l'extrémité conductrice 63 de la sonde.

Avec un tel montage, l'espace compris entre la couronne non conductrice 75, la partie conductrice 77 et l'extrémité 63 de la sonde peut être rempli d'un matériau non conducteur.

La fixation terminale des élargisseurs des figures 7 et 8 sur la sonde 4 peut être effectuée de la même manière qu'aux figures 5 et 6.

Néanmoins, dans le cas de la figure 8, on peut se passer du joint d'étanchéité 62.

En effet, dans le mode de réalisation de la figure 8, il n'est pas nécessaire d'isoler le fluide de remplissage du milieu environnant dans lequel doit opérer le dispositif selon l'invention.

La figure 8 comporte plusieurs variantes de réalisation de l'élargisseur. Selon une première variante, les couronnes non conductrices sont de grande épaisseur et peuvent même avoir une épaisseur égale à la distance séparant deux couronnes conductrices successives 262 et 272, comme c'est le cas de la couronne 78.

Par ailleurs, il est possible de réaliser le positionnement et le maintien des différentes couronnes, conductrices ou non, par un empilage d'entretoises et de couronnes comme cela est représenté à la figure 8. Les entretoises 79, 80 et 81 représentées sur cette figure servent à maintenir les couronnes 75, 282 et 71.

Il est bien évident que dans ce cas il convient de disposer de moyens de maintien et/ou de positionnement des entretoises, soit sur la sonde 4, soit sur l'enveloppe 65 de l'élargisseur. C'est ce dernier cas qui est représenté à la figure 8 où les efforts s'exerçant sur l'entretoise 79 sont transférés à l'enveloppe 65 par l'intermédiaire de la butée 82.

Les efforts sur la couronne isolante 183 de la figure 8 peuvent être transférés à la sonde par la couronne 183 elle-même.

L'entretoise 79 de la figure 8 au niveau de l'extrémité conductrice 83 est conductrice, afin d'y permettre le retour des courants électriques.

Bien entendu, si cette entretoise avait été non conductrice de l'électricité il aurait fallu que la partie conductrice 77 soit en contact direct avec l'extrémité conductrice 83 de la sonde 4, ceci, par exemple par l'intermédiaire de la portée 86.

La figure 10 montre un mode de réalisation particulier des couronnes conductrices 15. En effet, celles-ci sont enchassées entre deux couches de matériau isolant 86 et 87. L'ensemble ainsi obtenu isole complètement l'électrode 69.

Dans un tel mode de réalisation, les couronnes non conductrices se trouvant de part et d'autre de la couronne conductrice 15 sont réalisées de fait par les couches de matériau non conducteur 86 et 87.

Dans le cas de la figure 11, la couronne conductrice 15 est enchassée par des entretoises épaisses 88 et 82 qui assurent également la fonction de couronne non conductrice.

Sur les figures 10 et 11 la hauteur des électrodes 68 de l'élargisseur est sensiblement la même hauteur que les électrodes 69 de la sonde.

La figure 9 illustre le cas d'une sonde effectuant des mesures de résistivité focalisées et des mesures d'induction.

Dans ce cas, il convient que la sonde soit placée dans un milieu qui conduise le moins possible l'électricité. C'est pour cela que l'enveloppe 90 est rendue étanche de la même manière que l'enveloppe 35 de la figure 5. Ainsi cet élargisseur est en matériau non conducteur et comporte un bouchon 60, à la différence du mode de réalisation du dispositif de la figure 5.

L'enveloppe 90 comporte des électrodes ayant la forme de pastilles 161a, 161b, 161c, 161d..., comme illustré à la figure 13. Il convient de noter que la disposition présentée à la figure 13 s'applique aussi bien au cas de la figure 3 qu'à celui de la figure 9, puisque la sonde illustrée à la figure 3 est du même type que celle illustrée à la figure 9.

La différence entre ces deux modes de réalisation réside en ce que, dans le cas de la figure 3 l'élargisseur est formé d'un ensemble massif, alors que dans le cas de la figure 9 l'élargisseur comporte une enveloppe 90 et des couronnes de centrage 91, 92, 93 et alors que par ailleurs l'espace entre l'enveloppe 90 et la sonde 9 peut être rempli par un liquide isolant tel de l'eau distillée ou de l'huile.

Les électrodes en forme de pastille 161d sont disposées et connectées entre elles de la même manière qu'indiqué en relation avec les figures 3 et 13.

De préférence, une seule électrode 16a de chaque rangée 16 est connectée à une électrode en forme de pastille 161d de la rangée d'électrodes homologues se trouvant sur la paroi extérieure de l'élargisseur.

Cette connexion est illustrée en détail à la figure 12, la référence 16a désigne l'électrode en forme de pastille solidaire de la sonde 4. La référence 161d désigne l'électrode en forme de pastille se trouvant sur la paroi extérieure de l'élargisseur.

Cette pastille comporte un filetage 94 qui coopère avec un taraudage 95 pratiqué dans l'enveloppe 90 de l'élargisseur. Par ailleurs cette pastille comporte un logement 96 dans lequel est placé un ressort 97 à l'extrémité duquel est placé un contact 98.

Le ressort 97 a une longueur telle que lorsque la pastille 161d est vissée sur l'enveloppe 90, il maintient la liaison électrique entre la pastille 16a et le contact 98, formant ainsi un poussoir.

Bien entendu, le mode de réalisation illustré à la figure 9 nécessite un positionnement angulaire de l'élargisseur 7 relativement à la sonde 4, ceci peut être réalisé par tout moyen.

Par ailleurs, l'élargisseur de la figure 9 peut être adapté à sa partie inférieure de la même façon qu'illustré à la partie inférieure de la figure 6 afin de permettre le prolongement de la sonde 4 de la figure 9 par un élément supplémentaire notamment tubulaire.

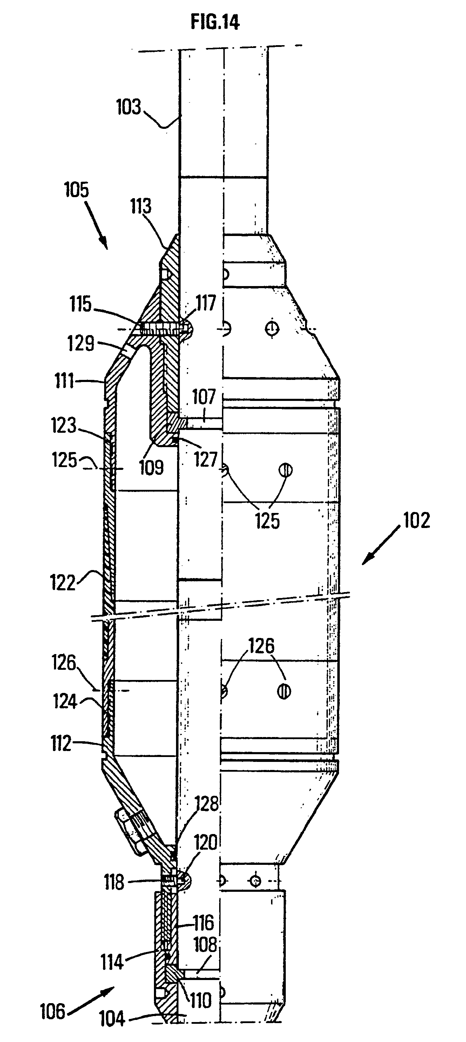

La figure 14 illustre une sonde 101 ou une partie sensible d'une sonde munie d'un carter 102 protégeant cette sonde notamment des actions longitudinales (de traction ou de compression) et transversales et de torsions existantes entre un élément supérieur 103 et un élément inférieur 104 respectivement raccordés aux parties supérieure et inférieure de la sonde 101.

Des contraintes mécaniques telles celles de traction ou de compression peuvent par exemple se produire dans l'utilisation des dispositifs et des méthodes décrits dans les brevets : US-A-4.457.370 ; US-A-4.570.709 ; FR-A-2.547.861 ; FR-A-2.544.013 ; ou FR-A-2.564.894.

Le carter est fixé aux extrémités de la sonde par deux organes de fixation 105 et 106 qui coopèrent respectivement avec deux gorges 107 et 108 placées aux extrémités de la sonde.

Le premier 105 et le deuxième 106 de ces deux organes de fixation comportent chacun un élément d'arrêt, tel qu'un système de deux demi-lunes respectivement 109, 110 coopérant avec la première 107 et la deuxième 108 gorge et formant un premier et un deuxième collet relativement à la surface extérieure de la sonde 101.

Un premier ensemble de pièces de fixation qui enchasse en le verrouillant le premier collet comporte une pièce intermédiaire 111 et une partie terminale 113 réalise deux butées adaptées à coopérer avec ce premier collet. Par enchâssement de l'organe d'arrêt, on entend que les pièces de fixation entourent l'organe d'arrêt en empêchant son échappement.

Un deuxième ensemble de pièces de fixation qui est réglable et qui enchasse en le verrouillant le deuxième collet comporte une pièce intermédiaire 112, une partie terminale 114 et une pièce de réglage 116 réalise deux butées adaptées à coopérer avec ce deuxième collet.

Le premier et le deuxième organe de fixation 105 et 106 sont immobilisés en rotation par rapport à la sonde au moyen de vis 115 et 118 solidarisant les pièces de fixation entre elles et dont les extrémités (de ces vis) coopèrent chacune avec des ergots 117 et 120 placés aux extrémités supérieures et inférieures de la sonde.

Entre chacun de ces deux organes de fixation 105 et 106 est vissée par deux filetages 123 et 124 une enveloppe protectrice 122 qui est immobilisée sur ces organes par des séries de vis 125 et 126, adaptées à empêcher une torsion entre les éléments inférieurs 104 et supérieurs 103 et adaptées à transmettre les efforts de torsion entre eux.

Si l'on veut procéder à une étanchéité du carter 102 on pourra placer des joints 127 et 128 dans les pièces intermédiaires 111 et 112 et permettre l'équilibre des pressions entre l'intérieur et l'extérieur du carter par un orifice 129.

Le carter pourra comporter des fenêtres adaptées au fonctionnement des organes, tels que bras d'ancrage, détecteur de sonde.

Bien entendu, le carter sera adapté à transmettre sans trop d'amortissement les signaux émis ou reçus par la sonde et l'influence de ce carter sur les mesures effectuées par une sonde sera connue de manière à permettre un étalonnage correct de la sonde.

Le carter pourra être adapté à ne protéger la sonde ou l'instrument que de certaines actions mécaniques. Ainsi, par exemple, le carter pourra être adapté qu'à ne protéger la sonde que des efforts de traction et de compression.

## Revendications

1. Dispositif permettant d'utiliser une sonde de diagraphie de faible diamètre relativement à un puits dans lequel elle doit opérer, ladite sonde comportant au moins une partie sensiblement adaptée à déterminer des caractéristiques électromagnétiques ou électriques des formations géologiques, caractérisé en ce qu'il comporte un élargisseur (7) du diamètre de ladite sonde, ledit élargisseur entourant ladite partie sensible, en ce que ledit élargisseur comporte une partie sensible correspondant à ladite partie sensible de ladite sonde, et en ce qu'il comporte des moyens de couplage électromagnétique ou électrique desdites parties sensibles.

2. Dispositif selon la revendication 1, caractérisé en ce que ledit élargisseur (7) comporte une enveloppe non gonflable (35) entourant au moins une partie sensible (33) de ladite sonde (4).

3. Dispositif selon la revendication 2, caractérisé en ce que ladite enveloppe (35) délimite un espace sensiblement étanche (59) autour de la partie sensible (33) de ladite sonde.

4. Dispositif selon la revendication 3, caractérisé en ce que ledit espace étanche (59) est rempli d'un matériau non conducteur de l'électricité tel de l'eau distillée ou de l'huile.

5. Dispositif selon la revendication 1 appliqué à une sonde comportant des électrodes (26), caractérisé en ce que l'élargisseur (7) de sonde comporte des électrodes (261) correspondantes à celles de la sonde et des moyens (262) de liaison électrique entre les électrodes (26) de ladite sonde (4) et celles (261) de l'élargisseur (7).

6. Dispositif selon la revendication 5, caractérisé en ce que les moyens de liaison électrique comportent une couronne électrique (262).

7. Dispositif selon la revendication 2, caractérisé en ce que ledit élargisseur (7) comporte des moyens de centrage (74) de ladite enveloppe.

8. Dispositif selon la revendication 7, caractérisé en ce que lesdits moyens de centrage comportent des couronnes (74).

9. Dispositif selon la revendication 8, caractérisé en ce que les moyens de centrage comportent des moyens de fixation (11, 12).

10. Dispositif selon l'une des revendications 6 ou 9, caractérisé en ce qu'il comporte des entretoises (80) servant au positionnement de certaines au moins desdites couronnes.

11. Dispositif selon la revendication 5, caractérisé en ce qu'il comporte des cloisons (70) non conductrices de l'électricité interposées entre au moins deux électrodes (26, 27) de la sonde (4).

12. Dispositif selon la revendication 1, caractérisé en ce que ledit élargisseur est un ensemble massif.

13. Dispositif selon une revendication précédente, caractérisé en ce qu'il est adapté a une sonde à induction.

14. Dispositif selon l'une des revendications 1 à 12, caractérisé en ce qu'il est adapté à une sonde de mesure de résistivité.

15. Dispositif selon l'une des revendications 1 à 12, caractérisé en ce qu'il est adapté à une sonde combinant des mesures de résistivité et d'induction.

16. Dispositif selon l'une des revendications 1 à 15, caractérisé en ce que ledit élargisseur assure la protection d'au moins une partie de ladite sonde.

17. Dispositif selon l'une des revendications 1 à 16, caractérisé en ce que ledit élargisseur est adapté à résister aux actions mécaniques latérales et/ou axiales (de compression et/ou de traction) et/ou rotatives.

18. Organe permettant la fixation de l'élargisseur selon l'une des revendications précédentes, caractérisé en ce que ledit organe de fixation comporte au moins un logement (57) coopérant avec au moins un élément d'arrêt (55), et en ce que ledit organe de fixation comporte en outre un ensemble de pièces de fixation (50, 51) retenu par l'élément d'arrêt et comportant au moins deux butées (53, 54) coopérant avec l'élément d'arrêt pour réaliser la fixation dudit élargisseur sur ladite sonde.

19. Organe selon la revendication 18, caractérisé en ce que ledit logement (57) est une gorge solidaire de la sonde, et en ce que ledit élément d'arrêt, tel un système de deux demi-lunes, réalise un collet pour ladite sonde.

20. Organe selon les revendications 18 et 19, caractérisé en ce que l'un au moins desdits éléments d'arrêt coopère avec deux desdites butées dudit ensemble de pièces de fixation.

21. Organe selon l'une des revendication 18 à 20, caractérisé en ce que ledit ensemble de pièces de fixation comporte une pièce supplémentaire (58) de réglage permettant de déplacer ledit élargisseur relativement à ladite sonde.

22. Organe selon l'une des revendications 18 à 21, caractérisé en ce que ledit élargisseur est un carter de protection d'au moins une partie sensible de la sonde.

23. Organe selon l'une des revendications 18 à 22, caractérisé en ce que ledit élargisseur est un élargisseur d'au moins une partie sensible de la sonde.

24. Organe selon l'une des revendications 18 à 23, caractérisé en ce que ledit organe de fixation comporte au moins deux gorges coopérant chacune avec un élément d'arrêt et réalisant chacun un collet pour ladite sonde et en ce que l'ensemble de pièces de fixation coopère avec au moins lesdits deux collets.

25. Organe selon l'une des revendications 18 à 24, caractérisé en ce que ledit élargisseur comporte au moins une fenêtre adaptée à laisser passer des organes actifs de mesures et/ou d'intervention de la sonde ou de l'instrument.

## Patentansprüche

1. Gerät, das es gestattet, eine Diagraphiesonde bezüglich eines Bohrlochs geringen Durchmessers, indem sie arbeiten soll, zu verwenden, wobei diese Sonde wenigstens einen Teil umfaßt, der im wesentlichen so ausgelegt ist, daß er elektromagnetische oder elektrische Eigenschaften der geologischen Formationen bestimmt, dadurch **gekennzeichnet**, daß es ein Verbreiterungsglied (7) für den Durchmesser dieser Sonde umfaßt, wobei dieses Verbreiterungsglied diesen empfindlichen Teil umschließt, daß dieses Verbreiterungsglied einen empfindlichen Teil entsprechend diesem empfindlichen Teil dieser Sonde umfaßt und daß es Mittel zur elektromagnetischen oder elektrischen Kopplung dieser empfindlichen Teile aufweist.

2. Gerät nach Anspruch 1, dadurch **gekennzeichnet**, daß dieses Verbreiterungsglied (7) eine nichtblähbare Hülle (35), die wenigstens einen empfindlichen Teil (33) dieser Sonde (4) umschließt, aufweist.

3. Gerät nach Anspruch 2, dadurch **gekennzeichnet**, daß diese Hülle (35) einen im wesentlichen dichten Raum (59) um den empfindlichen Teil (33) dieser Sonde begrenzt.

4. Gerät nach Anspruch 3, dadurch **gekennzeichnet**, daß dieser dichte Raum (59) mit einem die Elektrizität nichtleitenden Material wie destilliertem Wasser oder Öl gefüllt ist.

5. Gerät nach Anspruch 1, in Anwendung auf eine Elektroden (26) aufweisende Sonde, dadurch **gekennzeichnet**, daß das Sondenverbreiterungsglied (7) Elektroden (261) entsprechend denen der Sonde und Mittel (262) zur elektrischen Verbindung zwischen den Elektroden (26) dieser Sonde (4) und denen (261) des Verbreiterungsglieds (7) aufweist.

6. Gerät nach Anspruch 5, dadurch **gekennzeichnet**, daß die Mittel zur elektrischen Verbindung einen elektrischen Ring (262) umfassen.

7. Gerät nach Anspruch 2, dadurch **gekennzeichnet**, daß dieses Verbreiterungsglied (7) Mittel (74) zur Zentrierung dieser Hülle umfaßt.

8. Gerät nach Anspruch 7, dadurch **gekennzeichnet**, daß diese Zentriermittel Ringe bzw. Kränze (74) umfassen.

9. Gerät nach Anspruch 8, dadurch **gekennzeichnet**, daß die Zentriermittel Befestigungsmittel (11, 12) umfassen.

10. Gerät nach einem der Ansprüche 6 oder 9, dadurch **gekennzeichnet**, daß es Zwischenstücke (80), die der Positionierung wenigstens gewisser dieser Ringe bzw. Kränze dienen, umfaßt.

11. Gerät nach Anspruch 5, dadurch **gekennzeichnet**, daß es Elektrizität nichtleitende Trennwände (70) umfaßt, die zwischen wenigstens zwei Elektroden (26, 27) der Sonde (4) zwischengeschaltet sind.

12. Gerät nach Anspruch 1, dadurch **gekennzeichnet**, daß das Verbreiterungsglied eine massive Anordnung ist.

13. Gerät nach nach einem der vorhergehenden Ansprüche, dadurch **gekennzeichnet**, daß es für eine Induktionssonde ausgelegt ist.

14. Gerät nach einem der Ansprüche 1 bis 12, dadurch **gekennzeichnet**, daß es für eine den spezifischen Widerstand messende Sonde ausgelegt ist.

15. Gerät nach einem der Ansprüche 1 bis 12, dadurch **gekennzeichnet**, daß es ausgelegt ist für eine Sonde, die Messungen des spezifischen Widerstands und der Induktion kombiniert.

16. Gerät nach einem der Ansprüche 1 bis 15, dadurch **gekennzeichnet**, daß das Verbreiterungsglied den Schutz wenigstens eines Teiles dieser Sonde sicherstellt.

17. Gerät nach einem der Ansprüche 1 bis 16, dadurch **gekennzeichnet**, daß dieses Verbreiterungsglied so ausgelegt ist, daß es beständig ist gegen mechanische, seitliche und/oder axiale Wirkungen (Druck und/oder Zug) und/oder rotative Wirkungen.

18. Organ, das die Befestigung des Verbreiterungsglieds nach einem der vorhergehenden Ansprüche gestattet, dadurch **gekennzeichnet**, daß dieses Befestigungsorgan wenigstens ein Lager (57), das mit wenigstens einem Halteelement (55) zusammenwirkt, umfaßt und daß dieses Befestigungsorgan im übrigen eine Anordnung aus Befestigungsteilen (50, 51), die durch das Halteelement zurückgehalten wird, umfaßt und wenigstens zwei Anschläge (53, 54) aufweist, die mit dem Halteelement, um die Befestigung dieses Verbreiterungsglieds auf dieser Sonde herbeizuführen, zusammenwirken.

19. Organ nach Anspruch 18, dadurch **gekennzeichnet**, daß dieses Lager (57) eine bezüglich der Sonde festen Nut ist und daß dieses Halteelement, beispielsweise ein Doppelhalbmondsystem, einen Bund für diese Sonde schafft.

20. Organ nach einem der Ansprüche 18 und 19, dadurch **gekennzeichnet**, daß wenigstens eines dieser Halteelemente mit zweien dieser Anschläge dieser Anordnung von Befestigungsteilen zusammenwirkt.

21. Organ nach einem der Ansprüche 18 bis 20, dadurch **gekennzeichnet**, daß diese Anordnung aus Befestigungsstücken ein zusätzliches Regelstück (58) umfaßt, welches es ermöglicht, dieses Verbreiterungsglied relativ zur Sonde zu verschieben.

22. Organ nach einem der Ansprüche 18 bis 21, dadurch **gekennzeichnet**, daß dieses Verbreiterungsglied ein Schutzgehäuse wenigstens eines empfindlichen Teiles der Sonde ist.

23. Organ nach einem der Ansprüche 18 bis 22, dadurch **gekennzeichnet**, daß dieses Verbreiterungsglied ein Verbreiterungsglied wenigstens eines empfindlichen Teils der Sonde ist.

24. Organ nach einem der Ansprüche 18 bis 23, dadurch **gekennzeichnet**, daß dieses Befestigungsorgan wenigstens zwei Nuten umfaßt, die je mit einem Halteelement zusammenwirken und je einen Bund für diese Sonde bilden und daß die Anordnung aus Befestigungsstücken mit wenigstens diesen beiden Bunden zusammenwirkt.

25. Organ nach einem der Ansprüche 18 bis 24, dadurch **gekennzeichnet**, daß dieses Verbreiterungsglied wenigstens ein Fenster der Auslegung umfaßt, das aktive Med- und/oder Eingriffsorgane der Sonde oder des Instruments passieren lädt.

## Claims

1. Device permitting the use of a small diameter well logging probe, relative to a well in which it is required to operate, the said probe comprising at least one part basically designed to determine the electro magnetic or electrical characteristics of geological formations, characterised in that it comprises an under-reamer (7) for the diameter of the said probe, the said under-reamer surrounding the said sensitive part, the said under-reamer including a sensitive part corresponding to the said sensitive part of the said probe and in that it includes a means of electromagnetic or electrical connection of the said sensitive parts.

2. Device in accordance with claim 1, characterised in that the said under-reamer (7) comprises a non-expanding envelope (35) surrounding at least one sensitive part (33) of the said probe (4).

3. Device in accordance with claim 2, characterised in that the said envelope (35) defines a basically sealed space (59) around the sensitive part (33) of the said probe.

4. Device in accordance with claim 3, characterised in that the said sealed space (59) is filled with a material which is a non conductor of electricity, such as, distilled water or oil.

5. Device in accordance with claim 1, applied to a probe comprising electrodes (26), characterised in that the under-reamer (7) for the probe comprises electrodes (261) corresponding to those for the probe and a means (262) of providing an electrical connection between the electrodes (26) for the said probe (4) and those (261) for the under-reamer (7).

6. Device in accordance with claim 5, characterised in that the means of electrical connection comprises a slip ring (262).

7. Device in accordance with claim 2, characterised in that the said under-reamer (7) includes a means of centring (74) the said envelope.

8. Device in accordance with claim 7, characterised in that the said means of centring is in the form of rings (74).

9. Device in accordance with claim 8, characterised in that the means of centring includes a means of fixing (11, 12).

10. Device in accordance with one of claims 6 or 9, characterised in that it comprises spacers (80), these being used to position at least certain of the said rings.

11. Device in accordance with claim 5, characterised in that it comprises electrically non-conductive separators (70) inserted between at least two electrodes (26, 17) for the probe (4).

12. Device in accordance with claim 1, characterised in that the said under-reamer is a solid unit.

13. Device in accordance with one of the preceding claims, characterised in that it is designed for an induction type probe.

14. Device in accordance with one of claims 1 to 12, characterised in that it is designed for a resistivity type measurement probe.

15. Device in accordance with one of claims 1 to 12, characterised in that it is designed for a probe combining resistivity and induction type measurements.

16. Device in accordance with one of claims 1 to 15, characterised in that the said under-reamer provides a protection for at least one part of the said probe.

17. Device in accordance with one of claims 1 to 16, characterised in that the said under-reamer is designed to resist lateral and/or axial mechanical forces (compression and/or tension) and/or rotational forces.

18. Device for fixing the under-reamer in accordance with one of the preceding claims, characterised in that the said fixing device comprises at least one housing (57) co-operating with at least one stop device (55) and in that the said fixing device also includes an assembly of fixing parts (50, 51) retained by the stop device and comprising at least two stops (53, 54) co-operating with the stop device in order to fix the said under-reamer onto the said probe.

19. Device in accordance with claim 18, characterised in that the said housing (57) is a groove which is integral with the probe and in that the said stop device, such as, a system of two half moon shaped parts forms a collar for the said probe.

20. Device in accordance with claims 18 and 19, characterised in that at least one of the said stop devices co-operates with two of the said stops for the said assembly of fixing parts.

21. Device in accordance with one of claims 18 to 20, characterised in that the said assembly of fixing parts comprises a supplementary adjusting part (58) permitting the displacement of the said under-reamer relative to the said probe.

22. Device in accordance with one of claims 18 to 21, characterised in that the said under-reamer forms a protective casing for at least one sensitive part of the probe.

23. Device in accordance with one of claims 18 to 22, characterised in that the said under-reamer is an under-reamer associated with at least one sensitive part of the probe.

24. Device in accordance with one of claims 18 to 23, characterised in that the said fixing device includes at least two grooves, each co-operating with a stop device and each providing a collar for the said probe and in that the assembly of fixing parts co-operates with at least the said two collars.

25. Device in accordance with one of claims 18 to 24, characterised in that the said under-reamer comprises at least one opening designed to permit the operating measurement and/or intervention devices for the probe or the instrument to pass through.

FIG.1

FIG.2

**FIG.3**

**FIG.4**

FIG.5

FIG.6

**FIG.7**  **FIG.8**  **FIG.9**

**FIG.10**

86
15
66
68
69
87
67
4

**FIG.12**

4
90
16a
98
161d
97
96 95 94

**FIG.11**

88
67
66
68
15
14 – 13
82
69
4

**FIG.13**

161 c
163c
163b
161b
163a
161a
163d
96 97
161d
4
161e
163e

## FIG.14